# FASCICULE DE BREVET EUROPEEN

(11) **EP 1 679 209 B1**
(45) Date de publication et mention de la délivrance du brevet: **13.08.2008**
(21) Numéro de dépôt: 06300019.4
(22) Date de dépôt: 10.01.2006
(51) Int. Cl.: B60G 21/055, B60G 11/18

(54) **Dispositif de suspension pour barres de torsion**
Befestigungtseinrichtung für Stabilisatoren
Mounting device for stabiliser bars

(30) Priorité: 10.01.2005 FR 0550083
(43) Date de publication de la demande: 12.07.2006
(73) Titulaire: RENAULT S.A.S., 92100 Boulogne Billancourt (FR)
(72) Inventeur: Augade, Philippe, 78460 Chevreuse (FR)

(56) Documents cités:
- FR-A- 1 320 822
- FR-A- 2 794 689
- FR-A- 2 834 936
- US-A- 3 733 087
- US-A- 4 625 995
- US-A- 5 161 818

## Description

La présente invention se rapporte à un dispositif de suspension, préférentiellement, mais de manière non exclusive, une suspension avant, d'un véhicule automobile, comportant, notamment, des systèmes permettant la stabilisation des roues du véhicule lors d'actions de freinage ou de braquage.

Un tel dispositif selon le préambule de la revendication 1 est connu du document US 5 161 818 A.

Dans de tels dispositifs, les porte-fusées des roues sont, classiquement, liés, par des moyens appropriés, d'une part, au berceau du train du véhicule, et, d'autre part, à un ensemble d'éléments élastiques, tels que des ressorts (généralement des ressorts hélicoïdaux), remplissant la fonction de suspension. Selon un mode de réalisation connu dans l'état de la technique et présenté, par exemple, par les documents US20040155427 ou EP1270285, une barre anti-roulis est, de plus, liée par des moyens appropriés, d'une part audit berceau du train dudit véhicule, et, d'autre part, auxdits éléments élastiques : cette barre anti-roulis a, notamment, pour fonction de maintenir la stabilité des roues lors d'actions de freinage ou de braquage, en compensant, par son comportement élastique, les déséquilibres pouvant alors survenir.

Toutefois, l'évolution des normes en matière de choc piéton à l'avant du véhicule impose des contraintes de plus en plus importantes quant à la possibilité de déformation du capot du véhicule, et notamment, en termes d'écrasement dudit capot, écrasement pouvant être gêné par les ressorts hélicoïdaux mentionnés ci-dessus.

Une alternative consiste à compléter la barre anti-roulis par des éléments longitudinaux orientés vers l'arrière du véhicule, de manière à pouvoir supprimer lesdits ressorts. L'encombrement de tels éléments longitudinaux les rend toutefois relativement malaisés à insérer à l'architecture du véhicule. De plus, en cas de choc, un risque d'intrusion de ces éléments longitudinaux dans l'habitacle existe : une telle solution s'avère donc insatisfaisante pour la sécurité générale du véhicule.

La présente invention a pour but de proposer un système de suspension pour un véhicule automobile, préférentiellement pour une suspension avant, dans laquelle lesdits ressorts hélicoïdaux sont supprimés, tout en conservant des performances anti-roulis satisfaisantes.

L'invention atteint son but grâce à un dispositif de suspension d'un véhicule automobile comportant, notamment, une barre principale de torsion liée, par des moyens appropriés, d'une part au berceau du train dudit véhicule, et, d'autre part, aux porte-fusées des roues dudit véhicule, la partie centrale de ladite barre principale de torsion étant placée, sur ledit berceau, selon la direction sensiblement transversale dudit véhicule, caractérisé en ce qu'il comporte au moins une barre complémentaire sensiblement parallèle à ladite partie centrale de ladite barre principale de torsion.

Ladite au moins une barre complémentaire est liée, par des moyens appropriés, à l'une de ses extrémités, à ladite barre principale de torsion, et, à son extrémité opposée, audit berceau dudit train.

Avantageusement, la longueur de ladite au moins une barre complémentaire est sensiblement égale à celle de ladite partie centrale de ladite barre principale de torsion.

Avantageusement, ledit élément approprié de liaison entre ladite au moins une barre complémentaire et ladite barre principale de torsion permet la rotation de ladite au moins une barre complémentaire de façon solidaire de ladite barre principale de torsion.

Dans un mode de réalisation préféré de l'invention, deux barres complémentaires sont adjointes à ladite barre principale de torsion.

Dans d'autres modes de réalisation, le dispositif selon l'invention, comportant également deux barres complémentaires à ladite barre principale de torsion, peut également présenter une ou plusieurs des caractéristiques suivantes :
la longueur de chacune des barres complémentaires est sensiblement égale à la moitié de la longueur de ladite partie centrale de ladite barre principale de torsion,
ledit élément approprié à la liaison de chacune desdites barres complémentaires sur ledit berceau est sensiblement placé au milieu de ladite partie centrale de ladite barre principale de torsion,
chacun desdits éléments appropriés à la liaison de chacune desdites barres complémentaires sur ladite barre principale de torsion est sensiblement placé à proximité de chacune des extrémités de ladite partie centrale de ladite barre principale de torsion,
lesdites barres complémentaires sont liées à ladite barre principale de torsion au moyen d'un élément approprié unique, sensiblement placé au milieu de ladite partie centrale de ladite barre principale de torsion, et lesdits éléments appropriés permettant la liaison de chacune desdites barres complémentaires audit berceau sont sensiblement placés aux extrémités de ladite partie centrale de ladite barre principale de torsion.

D'autres caractéristiques et avantages de l'invention ressortiront à la lecture de la description qui suit, en référence aux dessins annexés dans lesquels :
- la figure 1 est une vue schématique en perspective des principaux éléments d'un dispositif de suspension connu dans l'état de la technique,
- la figure 2 est une vue schématique en perspective d'un mode de réalisation préféré de l'invention,
- la figure 3 est une vue schématique plus détaillée des barres complémentaires et principale selon l'invention,
- la figure 4 est une vue schématique en perspective d'un premier mode alternatif de réalisation de l'invention,
- la figure 5 est une vue schématique en perspective d'un second mode de réalisation alternatif de l'invention.

Pour la description qui suit, on définira un repère orthonormé (T, L, V) dans lequel les axes T, L, et V représentent respectivement les directions transversale, longitudinale, et verticale d'un véhicule automobile.

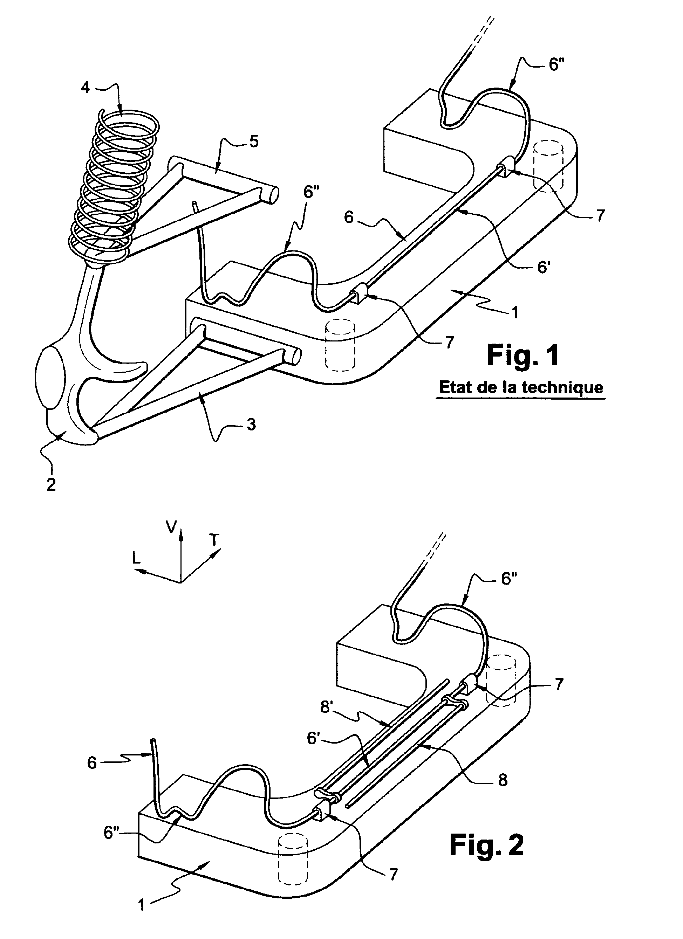

Dans un dispositif de suspension tel que connu par l'état de la technique, et comme le présente la figure 1, le berceau 1 d'un train (de préférence le train avant) d'un véhicule automobile est relié, à l'une de ses extrémités selon la direction transversale T dudit véhicule, à un élément de support de roue (ou "porte-fusée") 2 au moyen d'au moins un bras 3. Ledit porte-fusée 2 est également relié, par un élément approprié (non représenté sur la figure 1), à un ressort sensiblement hélicoïdal 4, lui-même lié, par un bras approprié 5, à une barre de torsion 6 dont la partie centrale 6' est placée sensiblement parallèlement à la direction transversale T dudit véhicule. Cette barre de torsion 6 est également rendue solidaire dudit berceau 1 par un ensemble d'éléments 7 appropriés (non détaillés sur la figure 1). Il est à noter que la figure 1 ne présente qu'un porte-fusée 2 et les éléments qui y sont liés : un agencement symétrique est lié à l'extrémité transversale opposée dudit berceau 1. La barre de torsion 6 est principalement composée de ladite partie centrale 6' sensiblement parallèle à ladite direction transversale T du véhicule, ainsi que, à chacune des extrémités de ladite partie 6', d'une partie 6" selon une direction générale sensiblement parallèle aux directions longitudinale L et verticale V : lesdites parties 6" permettent, notamment, la liaison de ladite barre de torsion 6 auxdits ressorts hélicoïdaux 4, par l'intermédiaire desdits bras 5.

Lorsque le véhicule équipé d'un tel système opère un virage, un freinage, ou lorsqu'il rencontre des cahots, l'élasticité desdits ressorts hélicoïdaux 4, combinée à l'élasticité de ladite barre de torsion 6, permet de compenser les déséquilibres éventuels survenant entre les deux roues.

Ainsi qu'il a été précédemment mentionné, toutefois, la présence desdits ressorts hélicoïdaux 4 peut s'avérer gênante en termes de sécurité, notamment, pour une suspension avant, dans le cas d'un choc piéton, lesdits ressorts hélicoïdaux 4, placés sensiblement selon une direction proche de la verticale V, s'opposant à l'écrasement du capot du véhicule.

Dans le dispositif selon l'invention, et ainsi que le présente la figure 2, au moins une barre complémentaire 8 est placée sensiblement parallèlement à la direction de la partie centrale 6' de la barre principale de torsion 6. Dans le mode de réalisation préféré de l'invention présenté par la figure 2, deux barres complémentaires 8 et 8' sont placées de part et d'autre de ladite partie centrale 6' de ladite barre principale de torsion 6, et chacune desdites barres complémentaires 8 et 8' a une longueur sensiblement égale à la longueur de ladite partie 6' de ladite barre principale de torsion 6, sensiblement parallèle à ladite direction transversale T.

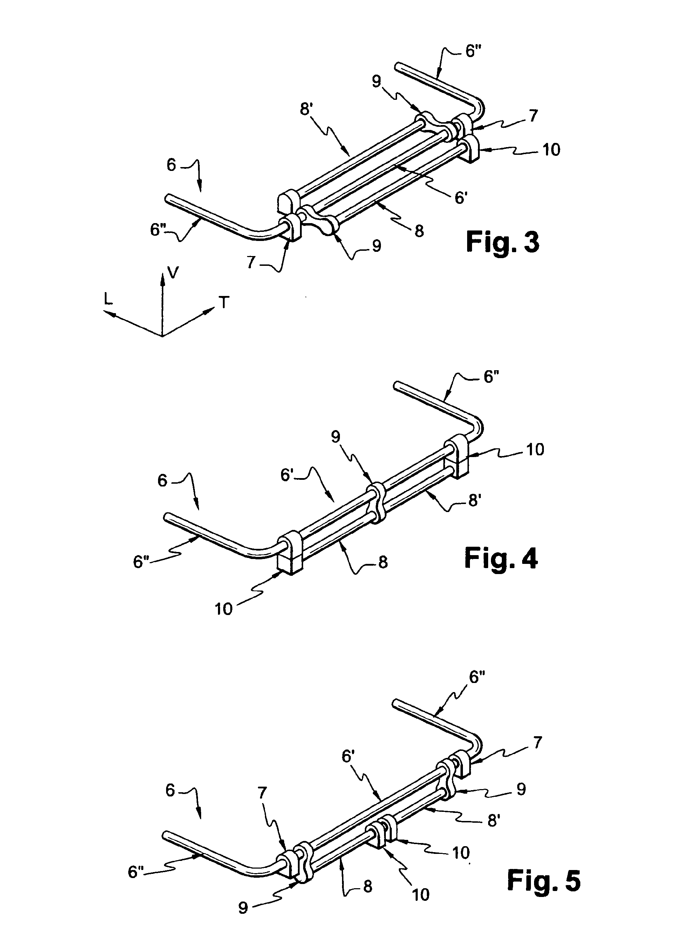

Ainsi que le montre la figure 3, chacune desdites barres complémentaires 8 et 8' est, à l'une de ses extrémités, liée solidairement à ladite partie centrale 6' de ladite barre principale de torsion 6 par l'intermédiaire d'un élément approprié 9 (non détaillé sur les figures) autorisant la rotation de ladite barre complémentaire 8 ou 8' de façon solidaire de ladite partie centrale 6' de ladite barre principale de torsion 6. A son extrémité opposée, chacune desdites barres complémentaires 8 et 8' est, par ailleurs, fixée audit berceau 1 au moyen d'un dispositif d'encastrement 10 approprié (non détaillé sur les figures). Par exemple et de manière non limitative, ledit élément approprié 9 est une patte percée, à chacune de ses extrémités, d'un orifice, chacune desdites barre 8 ou 8' et partie centrale 6' de ladite barre principale de torsion 6 s'emmanchant dans chacun desdits orifices.

Lors d'actions de freinage, ou lorsque le véhicule équipé d'un dispositif de suspension comportant les éléments selon l'invention réalise un virage, les débattements des roues, symétriques dans le premier cas, et antisymétriques dans le second cas, sont alors compensés par la raideur et l'élasticité combinées de l'ensemble selon l'invention. Il devient alors possible de supprimer les ressorts hélicoïdaux 4 précédemment mentionnés, libérant ainsi de l'espace sous le capot du véhicule.

Dans des modes alternatifs de réalisation de l'invention, les longueurs respectives desdites barres complémentaires 8 et 8' sont différentes, et différents agencements de la liaison desdites barres complémentaires 8 et 8' à la partie centrale 6' de la barre principale de torsion 6, d'une part, et au berceau 1 du train, d'autre part, peuvent être envisagés.

Ainsi, dans les deux modes alternatifs de réalisation de l'invention présentés par les figures 4 et 5, chacune desdites barres complémentaires 8 et 8' a une longueur sensiblement égale à la moitié de la longueur de la partie centrale 6' de la barre principale de torsion 6, dont la direction est sensiblement parallèle à ladite direction transversale T du véhicule.

Dans le mode alternatif de réalisation de l'invention présenté par la figure 4, un élément unique 9 assure la liaison de chacune desdites barres complémentaires 8 et 8' avec ladite partie centrale 6' de ladite barre principale de torsion 6, ledit élément unique 9 étant sensiblement placé au milieu de ladite partie 6' de ladite barre 6. Dans cet agencement, lesdits dispositifs d'encastrement 10 sont alors sensiblement placés à chacune des extrémités de ladite partie 6' de ladite barre principale de torsion 6 et permettent, outre l'encastrement de chacune desdites barres complémentaires 8 et 8', l'encastrement de ladite barre principale de torsion 6 sur ledit berceau 1, conduisant alors à la suppression desdits éléments 7 précédemment mentionnés.

Dans le mode alternatif de réalisation de l'invention présenté par la figure 5, lesdits dispositifs d'encastrement 10 sont placés en position sensiblement centrale de ladite partie 6' de ladite barre 6, et les éléments de liaison 9 sont situés sensiblement à chacune des extrémités de ladite partie 6' de ladite barre principale de torsion 6.

## Revendications

1. Dispositif de suspension d'un véhicule automobile comportant, notamment, une barre principale de torsion (6) liée, par des moyens appropriés, d'une part au berceau (1) du train dudit véhicule, et, d'autre part, aux porte-fusées (2) des roues dudit véhicule, la partie centrale (6') de ladite barre principale de torsion (6) étant placée, sur ledit berceau (1), selon la direction sensiblement transversale (T) dudit véhicule, ledit dispositif comportant au moins une barre complémentaire (8) sensiblement parallèle à ladite partie centrale (6') de ladite barre principale de torsion (6) **caractérisé en ce que** ladite au moins une barre complémentaire (8) est liée, à l'une de ses extrémités, par des moyens appropriés (9), à ladite partie centrale (6') de ladite barre principale de torsion (6), et, à son extrémité opposée, par un dispositif d'encastrement (10), audit berceau (1).

2. Dispositif selon la revendication 1, **caractérisé en ce que** ledit élément approprié (9) permet la rotation de ladite au moins une barre complémentaire (8) de façon solidaire de ladite partie centrale (6') de ladite barre principale de torsion (6).

3. Dispositif selon l'une quelconque des revendications 1 à 2, **caractérisé en ce que** la longueur de ladite au moins une barre complémentaire (8) est sensiblement égale à la longueur de ladite partie centrale (6') de ladite barre principale de torsion (6).

4. Dispositif selon l'une quelconque des revendications 1 à 3, **caractérisé en ce que** deux barres complémentaires (8) et (8') sont adjointes à ladite barre principale de torsion (6).

5. Dispositif selon l'une quelconque des revendications 1 à 4, **caractérisé en ce que** lesdites barres complémentaires (8) et (8') sont placées de part et d'autre de ladite partie centrale (6') de ladite barre principale de torsion (6).

6. Dispositif selon l'une quelconque des revendications 1 à 2, 4, **caractérisé en ce que** la longueur de chacune desdites barres complémentaires (8) et (8') est sensiblement égale à la moitié de la longueur de ladite partie centrale (6') de ladite barre principale de torsion (6).

7. Dispositif selon l'une quelconque des revendications 1 à 2, 4, 6, **caractérisé en ce que** lesdites barres complémentaires (8) et (8') sont liées à ladite partie centrale (6') de ladite barre principale de torsion (6) par un élément approprié (9) unique, sensiblement placé au milieu de ladite partie centrale (6') de ladite barre principale de torsion (6).

8. Dispositif selon l'une quelconque des revendications 1, 2, 4, 6 ou 7, **caractérisé en ce que** lesdits dispositifs d'encastrement (10) desdites barres complémentaires (8) et (8') dans ledit berceau (1) de train sont sensiblement placés aux extrémités de ladite partie centrale (6') de ladite barre (6) et assurent simultanément l'encastrement desdites barres complémentaires (8) et (8') et de ladite barre principale de torsion (6) sur ledit berceau (1).

9. Dispositif selon l'une quelconque des revendications 1, 2, 4 ou 5, **caractérisé en ce que** chacun desdits éléments (9) appropriés à la liaison desdites barres complémentaires (8) et (8') avec ladite partie centrale (6') de ladite barre principale de torsion (6) est placé à proximité des extrémités de ladite partie centrale (6') de ladite barre principale de torsion (6).

10. Dispositif selon l'une quelconque des revendications 1, 2, 4, 5 ou 9, **caractérisé en ce que** lesdits dispositifs d'encastrement (10) desdites barres complémentaires (8) et (8') dans ledit berceau (1) de train sont sensiblement placés en position centrale de ladite partie (6') de ladite barre principale de torsion (6).

11. Véhicule automobile comportant au moins un dispositif de suspension selon l'une quelconque des revendications 1 à 10.

## Claims

1. Motor vehicle suspension device comprising, in particular, a main stabilizer bar (6) connected, by appropriate means, on the one hand to the subframe (1) of the axle system of said vehicle, and on the other hand to the steering stub axles (2) of the wheels of said vehicle, the middle part (6') of said main stabilizer bar (6) being positioned, on said subframe (1), in the generally transverse direction (T) of said vehicle, said device comprising at least one additional bar (8) approximately parallel to said middle part (6') of said main stabilizer bar (6), which device is **characterized in that** said at least one additional bar (8) is connected, at one of its ends, by appropriate means (9), to said middle part (6') of said main stabilizer bar (6), and at its other end, by a socket device (10) , to said subframe (1).

2. Device according to Claim 1, **characterized in that** said appropriate element (9) allows said at least one additional bar (8) to rotate with said middle part (6') of said main stabilizer bar (6).

3. Device according to either of Claims 1 and 2, **characterized in that** the length of said at least one additional bar (8) is approximately equal to the length of said middle part (6') of said main stabilizer bar (6).

4. Device according to any one of Claims 1 to 3, **characterized in that** two additional bars (8) and (8') are attached to said main stabilizer bar (6).

5. Device according to any one of Claims 1 to 4, **characterized in that** said additional bars (8) and (8') are positioned on either side of said middle part (6') of said main stabilizer bar (6).

6. Device according to any one of Claims 1, 2 and 4, **characterized in that** the length of each of said additional bars (8) and (8') is approximately equal to half the length of said middle part (6') of said main stabilizer bar (6).

7. Device according to any one of Claims 1, 2, 4 and 6, **characterized in that** said additional bars (8) and (8') are connected to said middle part (6') of said main stabilizer bar (6) by a single appropriate element (9) positioned approximately in the middle of said middle part (6') of said main stabilizer bar (6).

8. Device according to any one of Claims 1, 2, 4, 6 and 7, **characterized in that** said socket devices (10) for holding said additional bars (8) and (8') in said axle system subframe (1) are positioned approximately at the ends of said middle part (6') of said bar (6) and hold said additional bars (8) and (8') and said main stabilizer bar (6) simultaneously on said subframe (1) .

9. Device according to any one of Claims 1, 2, 4 and 5, **characterized in that** each of said elements (9) appropriate to the connection of said additional bars (8) and (8') to said middle part (6') of said main stabilizer bar (6) is positioned in the vicinity of the ends of said middle part (6') of said main stabilizer bar (6).

10. Device according to any one of Claims 1, 2, 4, 5 and 9, **characterized in that** said socket devices (10) for holding said additional bars (8) and (8') in said axle system subframe (1) are positioned approximately in the central position of said part (6') of said main stabilizer bar (6).

11. Motor vehicle comprising at least one suspension device according to any one of Claims 1 to 10.

## Patentansprüche

1. Aufhängungsvorrichtung für ein Kraftfahrzeug, die insbesondere eine Hauptdrehstabfeder (6) enthält, die über geeignete Mittel einerseits mit der Wiege (1) des Fahrgestells des Fahrzeugs und andererseits mit den Achsschenkelträgern (2) der Räder des Fahrzeugs verbunden ist, wobei der Mittelteil (6') der Hauptdrehstabfeder (6) an der Wiege (1) in einer im Wesentlichen transversalen Richtung (T) des Fahrzeugs angeordnet ist, wobei die Vorrichtung wenigstens einen Zusatzstab (8) aufweist, der zu dem Mittelteil (6') der Hauptdrehstabfeder (6) im Wesentlichen parallel ist, **dadurch gekennzeichnet, dass** der wenigstens eine Zusatzstab (8) an einem seiner Enden durch geeignete Mittel (9) mit dem Mittelteil (6') der Hauptdrehstabfeder (6) und an seinem gegenüberliegenden Ende durch eine Befestigungsvorrichtung (10) mit der Wiege (1) verbunden ist.

2. Vorrichtung nach Anspruch 1, **dadurch gekennzeichnet, dass** das geeignete Element (9) die Drehung des wenigstens einen Zusatzstabs (8) auf mit dem Mittelteil (6') der Hauptdrehstabfeder (6) fest verbundene Weise ermöglicht.

3. Vorrichtung nach einem der Ansprüche 1 bis 2, **dadurch gekennzeichnet, dass** die Länge des wenigstens einen Zusatzstabs (8) im Wesentlichen gleich der Länge des Mittelteils (6') der Hauptdrehstabfeder (6) ist.

4. Vorrichtung nach einem der Ansprüche 1 bis 3, **dadurch gekennzeichnet, dass** zwei Zusatzstäbe (8) und (8') mit der Hauptdrehstabfeder (6) zusammengefügt sind.

5. Vorrichtung nach einem der Ansprüche 1 bis 4, **dadurch gekennzeichnet, dass** die Zusatzstäbe (8) und (8') beiderseits des Mittelteils (6') der Hauptdrehstabfeder (6) angeordnet sind.

6. Vorrichtung nach einem der Ansprüche 1 bis 2, 4, **dadurch gekennzeichnet, dass** die Länge jedes der Zusatzstäbe (8) und (8') im Wesentlichen gleich der halben Länge des Mittelteils (6') der Hauptdrehstabfeder (6) ist.

7. Vorrichtung nach einem der Ansprüche 1 bis 2, 4, 6, **dadurch gekennzeichnet, dass** die Zusatzstäbe (8) und (8') mit dem Mittelteil (6') der Hauptdrehstabfeder (6) durch ein einziges geeignetes Element (9) verbunden sind, das im Wesentlichen in der Mitte des Mittelteils (6') der Hauptdrehstabfeder (6) angeordnet ist.

8. Vorrichtung nach einem der Ansprüche 1, 2, 4, 6 oder 7, **dadurch gekennzeichnet, dass** die Vorrichtungen (10) für die Befestigung der Zusatzstäbe (8) und (8') an der Wiege (1) des Fahrgestells im Wesentlichen an den Enden des Mittelteils (6') des Stabs (6) angeordnet sind und gleichzeitig die Befestigung der Zusatzstäbe (8) und (8') und der Hauptdrehstabfeder (6) an der Wiege (1) sicherstellen.

9. Vorrichtung nach einem der Ansprüche 1, 2, 4 oder 5, **dadurch gekennzeichnet, dass** jedes der Elemente (9), die für die Verbindung der Zusatzstäbe (8) und (8') mit dem Mittelteil (6') der Hauptdrehstabfeder (6) geeignet sind, in der Nähe der Enden des Mittelteils (6') der Hauptdrehstabfeder (6) angeordnet ist.

10. Vorrichtung nach einem der Ansprüche 1, 2, 4, 5 oder 9, **dadurch gekennzeichnet, dass** die Vorrichtungen (10) für die Befestigung der Zusatzstäbe (8) und (8') an der Fahrgestellwiege (1) im Wesentlichen an der Mittelposition des Teils (6') der Hauptdrehstabfeder (6) angeordnet sind.

11. Kraftfahrzeug, das wenigstens eine Aufhängungsvorrichtung nach einem der Ansprüche 1 bis 10 enthält.
